# EUROPÄISCHE PATENTANMELDUNG

(11) **EP 4 398 324 A1**
(43) Veröffentlichungstag der Anmeldung: **10.07.2024**
(21) Anmeldenummer: 23215900.4
(22) Anmeldetag: 12.12.2023
(51) Int. Cl.: H01M 4/04, H01M 4/139, H01M 4/1391

(54) **VORRICHTUNG UND VERFAHREN ZUR HERSTELLUNG EINER ELEKTRODE**

(30) Priorität: 03.01.2023 DE 102023200011
(71) Anmelder: VOLKSWAGEN AG, 38440 Wolfsburg (DE)
(72) Erfinder: BUßWINKEL, Ludger, 38106 Braunschweig (DE); REUBER, Sebastian, 01099 Dresden (DE); SCHMIDT-LOBACH, Roland, 39356 Hörsingen (DE); SCHOPF, Sven, 38116 Braunschweig (DE)
(74) Vertreter: FDST Patentanwälte

(57) **Zusammenfassung**

Die Erfindung betrifft ein Verfahren zur Herstellung einer Elektrode (4) mit einem Substrat (30) und mit einem ersten Trockenfilm (22), wobei zur Bildung eines ersten Trockenfilms (22) lösungsmittelfreies Trockenfilmmaterial in einen zwischen einer ersten Walze (6) und einer zweiten Walzen (8) gebildeten ersten Walzenspalt (18) gebracht wird, wobei der im ersten Walzenspalt (18) gebildete erste Trockenfilm (22) walzengetragen in einen zwischen der zweiten Walze (8) und einer dritten Walze (10) gebildeten zweiten Walzenspalt (24) gefördert und dort verdichtet wird, und wobei zum Laminieren der verdichtete erste Trockenfilm (22) sowie das Substrat (30) in einen zwischen der dritten Walze (10) und einer vierten Walze (12) gebildeten dritten Walzenspalt (26) gefördert werden, wobei der erste Trockenfilm (22) walzengetragen in den dritten Walzenspalt (26) gefördert wird. Des Weiteren betrifft die Erfindung eine entsprechende Vorrichtung (2) zur Herstellung der Elektrode (4).

## Beschreibung

Die Erfindung betrifft eine Vorrichtung sowie ein Verfahren zur Herstellung einer Elektrode, welche ein Substrat sowie eine Trockenfilmschicht mit Aktivmaterial umfasst.

Zur Herstellung einer Elektrode mit einem Substrat und mit einem Trockenfilm wird, wie beispielsweise aus der WO 2018/210723 A1 bekannt ist, zunächst ein Trockenfilmmaterial anhand eines Pulverförderers zwischen zwei Walzen einer Walzenvorrichtung gefördert. Anhand dieser Walzen werden Druck- und/oder Scherkräfte in das Trockenfilmmaterial eingeleitet, so dass sich der Trockenfilm bildet. Der Trockenfilm wird auf einer der Walzen in einen weiteren Spalt gefördert. Dabei wird durch diesen weiteren Spalt zusätzlich ein Substrat geführt, so dass der Trockenfilm mit dem Substrat laminiert wird.

Bei einem derartigen Herstellungsverfahren weist der Trockenfilm eine vergleichsweise geringe Dichte auf. Dies ist hinsichtlich einer Energie- und/oder Leistungsdichte bei einer direkten Verwendung in einer Batterie eines Kraftfahrzeugs nachteilig, so dass der Trockenfilm typischerweise nachverdichtet wird. Hierzu erfolgt die Nachverdichtung des Trockenfilms beispielsweise im Zuge der Laminierung des Substrats mit dem Trockenfilm. Es besteht allerdings die Gefahr einer Faltenbildung in einem Ableiterbereich des Substrats und/oder die Gefahr eines Risses des Substrats, insbesondere aufgrund von Inhomogenitäten.

Der Erfindung liegt die Aufgabe zugrunde, ein besonders geeignetes Verfahren und/oder eine besonders geeignete Vorrichtung zur Herstellung einer Elektrode mit einem Substrat und mit einem Trockenfilm anzugeben. Insbesondere soll die hergestellte Elektrode einen vergleichsweise dichten Trockenfilm aufweisen, und/oder ein Nachverdichten im Zuge des Laminierens vermieden sein.

Bezüglich des Verfahrens wird die Aufgabe erfindungsgemäß gelöst durch die Merkmale des Anspruchs 1. Hinsichtlich der Vorrichtung wird die Aufgabe mit den Merkmalen des Anspruchs 9 erfindungsgemäß gelöst. Vorteilhafte Ausgestaltungen und Weiterbildungen sind Gegenstand der Unteransprüche. Dabei gelten die Ausführungen im Zusammenhang mit der Vorrichtung sinngemäß auch für das Verfahren und umgekehrt.

Die Erfindung betrifft ein Verfahren zur Herstellung einer Elektrode, insbesondere für eine Lithium-lonen-Batterie. Die Elektrode umfasst hierbei ein Substrat, insbesondere ein folienartiges Substrat wie beispielsweise eine Metallfolie, sowie einen ersten Trockenfilm, der auf einer ersten Seite des Substrats angeordnet ist, vorzugsweise mit diesem gefügt, insbesondere auf das Substrat auflaminiert ist. Das Substrat bildet zweckmäßiger Weise einen Stromsammler der Elektrode. Der Trockenfilm bildet zweckmäßiger Weise eine Schicht mit Aktivmaterial, welches insbesondere für eine Anode oder für eine Kathode einer Lithium-Ionen-Batterie vorgesehen ist.

Verfahrensgemäß wird in einem ersten Schritt zur Bildung eines ersten Trockenfilms lösungsmittelfreies Trockenfilmmaterial in einen ersten Walzenspalt gebracht, insbesondere gefördert, welcher erste Walzenspalt zwischen einer ersten Walze und einer zweiten Walze gebildet ist. Das in den ersten Walzenspalt geförderte Trockenfilmmaterial wird anhand der ersten und der zweiten Walze zum ersten Trockenfilm verarbeitet. Hierzu wird auf das Trockenfilmmaterial anhand der ersten und der zweiten Walze eine Press- und/oder eine Scherkraft erzeugt, so dass sich die Partikel des Trockenfilmmaterials miteinander verbinden.

Das Trockenfilmmaterial ist dabei zweckmäßigerweise eine auch als Granulat bezeichnete granulare Materie, beispielsweise ein Pulver oder eine Pulvermischung. Das Trockenfilmmaterial weist dabei ein (trockenes) Aktivmaterial, einen (trockenen) Binder und/oder ein (trockenes) Leitmittel auf. Mit anderen Worten umfasst das Trockenfilmmaterial eine Mischung aus ungelösten Aktivmaterialpartikeln, aus ungelösten Binderpartikeln und/oder aus ungelösten Leitmittelpartikeln.

In einem zweiten Schritt wird der im ersten Walzenspalt gebildete erste Trockenfilm walzengetragen in einen zweiten Walzenspalt gefördert, der zwischen der zweiten Walze und einer dritten Walze gebildet. Mit anderen Worten wird der erste Trockenfilm anhand der zweiten Walze vom ersten Walzenspalt in den zweiten Walzenspalt gefördert. Dabei ist der erste Trockenfilm nicht freistehend, sondern ist für die Förderung vom ersten Walzenspalt zum zweiten Walzenspalt an der zweiten Walze angeordnet, und wird insbesondere von dieser getragen, also mitgenommen.

Anhand der zweiten und der dritten Walze wird der erste Trockenfilm im zweiten Walzenspalt verdichtet. Zweckmäßig wird der erste Trockenfilm auf eine vorgegebene Zieldichte oder eine vorgegebene Zieldicke verdichtet. Die Zieldichte bzw. die Zieldicke ist dabei insbesondere diejenige Dichte bzw. Dicke, welche der Trockenfilm nach der Herstellung der Elektrode, also auch bei deren Einsatz in einer Batteriezelle, insbesondere Li-lonen-Batteriezelle, aufweisen soll. Die Zieldichte bzw. die Zieldicke ist also vorzugsweise derart gewählt, dass eine weitere Verdichtung des Trockenfilms nicht notwendig ist, und zweckmäßig auch nicht durchgeführt wird. Somit ist ein Nachverdichten des ersten Trockenfilms im Zuge des Auflaminierens auf das Substrat (vergleiche Schritt drei) nicht notwendig. Alternativ wird eine vergleichsweise geringe Linienlast hierzu verwendet. Damit einhergehend ist die Gefahr einer Beschädigung des ersten Trockenfilms und/oder des Substrats beim Nachverdichten vorteilhaft vermieden.

Zusammenfassend dient der zweite Verfahrensschritt dem Verdichten des ersten Trockenfilms.

In einem dritten Schritt des Verfahrens werden der verdichtete erste Trockenfilm sowie das Substrat in einen dritten Walzenspalt gefördert, welcher zwischen der dritten Walze und einer vierten Walze gebildet ist. Hierbei wird der erste der Trockenfilm an der dritten Walze walzengetragen in den dritten Walzenspalt gefördert. Geeigneter Weise wird das Substrat zwischen dem an der dritten Walze getragene ersten Trockenfilm und der vierten Walze in den dritten Walzenspalt gefördert. Im dritten Walzenspalt wird das Substrat um der verdichtete erste Trockenfilm miteinander laminiert. Hierbei wird die Linienlast derart gewählt, dass der erste Trockenfilm zuverlässig, also sicher mit dem Substrat verbunden ist. Beispielsweise wird im dritten Walzenspalt der Trockenfilm nochmals verdichtet, allerdings wird hierzu eine vergleichsweise Linienlast verwendet, um Risse oder Faltenbildung zu vermeiden. Vorzugsweise wird eine größere Linienlast als zum Laminieren notwendig ist nicht verwendet.

Beispielsweise beträgt die Linienlast für die Filmbildung im ersten Spalt zwischen 200 N/mm und 2000 N/mm, die Linienlast für die Verdichtung im zweiten Spalt zwischen 500 N/mm und 4000 N/mm, und/oder die Linienlast für das Laminieren zwischen 200 N/mm und 2000 N/mm.

Aufgrund der walzentragen Förderung des ersten Trockenfilms sowohl vom ersten Walzenspalt zum zweiten Walzenspalt sowie vom zweiten Walzenspalt zum dritten Walzenspalt ist es vorteilhaft ermöglicht, den ersten Trockenfilm vergleichsweise dünn herzustellen und/oder den Binderanteil zu reduzieren. So ist im Vergleich zur Herstellung des ersten Trockenfilms als ein freistehender Trockenfilm, also bei einer Herstellung bei welcher der erste Trockenfilm freistehend, insbesondere ohne Stütze, gefördert wird, eine Anforderung an dessen mechanische Stabilität reduziert.

Gemäß einer vorteilhaften Ausgestaltung des Verfahrens wird das Substrat auf dessen zweiten Seite mit einem zweiten Trockenfilm versehen.

Gemäß einer ersten Variante wird hierzu in analoger weise zum ersten Schritt des Verfahrens lösungsmittelfreies Trockenfilmmaterial in einen vierten Walzenspalt gebracht, insbesondere gefördert, welcher vierte Walzenspalt zwischen einer fünften Walze und einer sechsten Walze gebildeten ist. Das in den ersten Walzenspalt geförderte Trockenfilmmaterial wird dabei anhand der fünften und der sechsten Walze zum zweiten Trockenfilm verarbeitet. Beispielsweise wird für den zweiten Trockenfilm das gleiche Trockenfilmmaterial wie für den ersten Trockenfilm verwendet, alternativ hierzu wird ein anderes Trockenfilmmaterial verwendet.

Anschließend wird in analoger Weise zum zweiten Schritt des Verfahrens der im vierten Walzenspalt gebildete zweite Trockenfilm an der sechsten Walze walzengetragen in einen fünften Walzenspalt gefördert, welcher zwischen der sechsten Walze und einer siebten Walze gebildet ist. Also wird der zweite Trockenfilm anhand der sechsten Walze vom vierten Walzenspalt in den fünften Walzenspalt gefördert. Dabei ist der zweite Trockenfilm nicht freistehend, sondern ist für die Förderung vom vierten Walzenspalt zum fünften Walzenspalt an der sechsten Walze angeordnet, und wird insbesondere von dieser getragen, somit mitgenommen.

Anhand der sechsten und der siebten Walze wird der zweite Trockenfilm im fünften Walzenspalt verdichtet. Zweckmäßig wird der zweite Trockenfilm auf eine vorgegebene Zieldichte oder eine vorgegebene Zieldicke verdichtet. Die Zieldichte bzw. die Zieldicke für den zweiten Trockenfilm ist dabei insbesondere diejenige Dichte bzw. Dicke, welche der Trockenfilm nach der Herstellung der Elektrode, also auch bei deren Einsatz in einer Batteriezelle, insbesondere Li-lonen-Batteriezelle, aufweisen soll. Die Zieldichte bzw. die Zieldicke ist dabei vorzugsweise derart gewählt, dass eine weitere Verdichtung des zweiten Trockenfilms nicht notwendig ist, und zweckmäßig auch nicht durchgeführt wird. Somit ist ein Nachverdichten des zweiten Trockenfilms im Zuge des Auflaminierens auf das Substrat nicht notwendig. Damit einhergehend ist die Gefahr einer Beschädigung des ersten Trockenfilms, des zweiten Trockenfilms und/oder des Substrats beim Nachverdichten vorteilhaft vermieden. Alternativ hierzu wird eine vergleichsweise geringe Linienlast für ein geringfügiges Verdichten verwendet. Zusammenfassend wird beispielsweise im fünften Walzenspalt der Trockenfilm also nochmals verdichtet, allerdings wird hierzu eine vergleichsweise Linienlast verwendet, um Risse oder Faltenbildung zu vermeiden. Vorzugsweise wird eine größere Linienlast als zum Laminieren notwendig ist nicht verwendet. Darauffolgend werden der verdichtete zweite Trockenfilm sowie das mit dem ersten Trockenfilm versehene, insbesondere laminierte, Substrat in einen sechsten Walzenspalt gefördert, welcher zwischen der siebten Walze und einer achten Walze gebildet ist. Hierbei wird der zweite der Trockenfilm an der an der siebten Walze walzengetragen in den sechsten Walzenspalt gefördert. Geeigneter Weise wird der zweite Trockenfilm derart in den sechsten Walzenspalt gefördert, dass das Substrat zwischen dem ersten Trockenfilm und dem zweiten Trockenfilm angeordnet ist. Im sechsten Walzenspalt wird der verdichtete zweite Trockenfilm auf die zweite Seite des Substrats auflaminiert. Hierbei wird die Linienlast derart gewählt, dass der erste und der zweite Trockenfilm zuverlässig, also sicher mit dem Substrat verbunden ist. Eine größere Linienlast zum weiteren Verdichten des ersten bzw. zweiten Trockenfilms ist allerdings nicht notwendig und wird zweckmäßig nicht verwendet.

Beispielsweise beträgt die Linienlast für die Filmbildung im vierten Spalt zwischen 200 N/mm und 2000 N/mm, die Linienlast für die Verdichtung im fünften Spalt zwischen 500 N/mm und 4000 N/mm, und/oder die Linienlast für das Laminieren im sechsten Spalt zwischen 200 N/mm und 2000 N/mm.

Zusammenfassend werden bei dieser ersten Variante anhand der ersten, der zweiten, der dritten und der vierten Walze der erste Trockenfilm gebildet, dieser verdichtet und auf die erste Seite des Substrats auflaminiert. Anhand der fünften, sechsten, siebten und achten Walze wird der zweite Trockenfilm gebildet, dieser verdichtet und auf die zweite Seite des mit dem ersten Trockenfilm versehenen Substrats auflaminiert.

Bevorzugt sind dabei die erste bis vierte Walze in einer Reihe angeordnet, also sind deren Achsen parallel zueinander orientiert und in einer gemeinsamen ersten Ebene angeordnet. Die fünfte bis achte Walze sind bevorzugt ebenfalls in einer Reihe angeordnet, also sind deren Achsen parallel zueinander orientiert und in einer gemeinsamen zweiten Ebene angeordnet, wobei diese vorzugsweise parallel und beabstandet oder geneigt gegen die erste Ebene ist. Aufgrund der Anordnung der jeweiligen Walzen in einer Reihe ist ein Wölben der Walzen aufgrund der Linienlasten vorteilhaft vermieden oder zumindest reduziert.

Gemäß einer zweiten, alternativen Variante wird in analoger Weise zum ersten Schritt des Verfahrens lösungsmittelfreies Trockenfilmmaterial in einen vierten Walzenspalt gebracht, insbesondere gefördert, welcher vierte Walzenspalt zwischen einer fünften Walze und einer sechsten Walze gebildeten ist. Das in den ersten Walzenspalt geförderte Trockenfilmmaterial wird dabei anhand der fünften und der sechsten Walze zum zweiten Trockenfilm verarbeitet. Beispielsweise wird für den zweiten Trockenfilm das gleiche Trockenfilmmaterial wie für den ersten Trockenfilm verwendet, alternativ hierzu wird ein anderes Trockenfilmmaterial verwendet.

Anschließend wird in analoger Weise zum zweiten Schritt des Verfahrens der im vierten Walzenspalt gebildete zweite Trockenfilm an der sechsten Walze walzengetragen in einen fünften Walzenspalt gefördert, welcher zwischen der sechsten Walze und der vierten Walze gebildet ist. Also wird der zweite Trockenfilm anhand der sechsten Walze vom vierten Walzenspalt in den fünften Walzenspalt gefördert. Dabei ist der zweite Trockenfilm nicht freistehend, sondern ist für die Förderung vom vierten Walzenspalt zum fünften Walzenspalt an der sechsten Walze angeordnet, und wird insbesondere von dieser getragen, somit mitgenommen.

Anhand der sechsten und der vierten Walze wird der zweite Trockenfilm im fünften Walzenspalt verdichtet. Zweckmäßig wird der zweite Trockenfilm auf eine vorgegebene Zieldichte oder eine vorgegebene Zieldicke verdichtet. Die Zieldichte bzw. die Zieldicke ist dabei insbesondere diejenige Dichte bzw. Dicke, welche der Trockenfilm nach der Herstellung der Elektrode, also auch bei deren Einsatz in einer Batteriezelle, insbesondere Li-lonen-Batteriezelle, aufweisen soll. Die Zieldichte bzw. die Zieldicke ist dabei vorzugsweise derart gewählt, dass eine weitere Verdichtung des zweiten Trockenfilms nicht notwendig ist, und zweckmäßig auch nicht durchgeführt wird. Somit ist ein Nachverdichten des zweiten Trockenfilms im Zuge des Auflaminierens auf das Substrat nicht notwendig. Alternativ hierzu wird eine vergleichsweise geringe Linienlast für ein geringfügiges Verdichten verwendet. Damit einhergehend ist die Gefahr einer Beschädigung des ersten Trockenfilms und/oder des Substrats beim Nachverdichten vorteilhaft vermieden.

Darauffolgend werden der verdichtete zweite Trockenfilm, der erste Trockenfilm, sowie das Substrat in den dritten Walzenspalt gefördert. Hierbei wird der zweite der Trockenfilm an der an der vierten Walze walzengetragen in den dritten Walzenspalt gefördert. Geeigneter Weise wird der zweite Trockenfilm derart in den dritten Walzenspalt gefördert, dass das Substrat zwischen dem ersten Trockenfilm und dem zweiten Trockenfilm angeordnet ist. Im dritten Walzenspalt wird der verdichtete erste Trockenfilm auf die erste Seite des Substrats und der verdichtete zweite Trockenfilm auf die zweite Seite des Substrats auflaminiert. Also erfolgt das Laminieren des ersten und des zweiten Trockenfilms auf das Substrat gemeinsam im dritten Walzenspalt. Mit noch anderen Worten erfolgt das Laminieren des ersten Trockenfilms gemäß dem dritten Schritt zusammen mit dem Laminieren des zweiten Trockenfilms auf das Substrat. Hierbei wird die Linienlast derart gewählt, dass der erste und der zweite Trockenfilm zuverlässig, also sicher mit dem Substrat verbunden ist. Eine größere Linienlast zum weiteren Verdichten des ersten bzw. zweiten Trockenfilms ist allerdings nicht notwendig und wird zweckmäßig nicht verwendet.

Beispielsweise beträgt die Linienlast für die Filmbildung im vierten Spalt zwischen 200 N/mm und 2000 N/mm, die Linienlast für die Verdichtung im fünften Spalt zwischen 500 N/mm und 4000 N/mm, und/oder die Linienlast für das Laminieren im dritten Spalt zwischen 200 N/mm und 2000 N/mm.

Zusammenfassend werden bei dieser zweiten Variante anhand der ersten, der zweiten, der dritten und der vierten Walze der erste Trockenfilm gebildet, dieser verdichtet und auf die erste Seite des Substrats auflaminiert. Anhand der fünften, sechsten, vierten und dritten Walze wird der zweite Trockenfilm gebildet, dieser verdichtet und auf die zweite Seite des Substrats auflaminiert.

Bevorzugt sind dabei die erste bis sechste Walze in einer Reihe angeordnet, also sind deren Achsen parallel zueinander orientiert und in einer gemeinsamen Ebene angeordnet. Die Walzenanordnung ist somit symmetrisch aufgebaut. Aufgrund der Anordnung der Walzen in einer Reihe ist ein Wölben der Walzen aufgrund der Linienlasten vorteilhaft vermieden oder zumindest reduziert.

Weiter zusammenfassend werden bei allen Varianten der erste und/oder der zweite Trockenfilm bis zu der Laminierung mit dem Substrat lediglich walzengetragen gefördert. So können auch solche Dicken und/oder Dichten des ersten bzw. des zweiten Trockenfilms realisiert werden, die für eine freistehende, also nicht walzengetragene Förderung aufgrund zu geringer mechanischer Stabilität nicht geeignet sind.

Gemäß einer geeigneten Ausgestaltung wird der erste Trockenfilm im zweiten Walzenspalt und/oder der zweite Trockenfilm im sechsten Walzenspalt jeweils auf eine Dichte zwischen 1,0 g/cm³ und 4 g/cm³, insbesondere zwischen 1,4 g/cm³ und 3,7 g/cm³ verdichtet. Mit anderen Worten wird der erste Trockenfilm im zweiten Walzenspalt und/oder der zweite Trockenfilm im sechsten Walzenspalt jeweils derart verdichtet, dass der erste bzw. der zweite Trockenfilm nach dem Verdichten eine Dichte zwischen 1,0 g/cm³ und 4 g/cm³, insbesondere zwischen 1,4 g/cm³ und 3,7 g/cm³ aufweisen.

Gemäß einer geeigneten Ausgestaltung wird zusätzlich oder alternativ hierzu der erste Trockenfilm im zweiten Walzenspalt und/oder der zweite Trockenfilm im sechsten Walzenspalt jeweils auf eine Dicke zwischen 10 µm und 200 µm, beispielsweise auf eine Dicke zwischen 30 µm und 150 µm, insbesondere zwischen 40 µm und 120 µm verdichtet. Mit anderen Worten wird der erste Trockenfilm im zweiten Walzenspalt und/oder der zweite Trockenfilm im sechsten Walzenspalt jeweils derart verdichtet, dass der erste bzw. der zweite Trockenfilm nach dem Verdichten eine Dicke zwischen 10 µm und 200 µm, beispielsweise auf eine Dicke zwischen 30 µm und 150 µm, insbesondere zwischen 40 µm und 120 µm aufweisen. Hierzu weist der zweite bzw. der sechste Walzenspalt eine entsprechende Spaltbreite, geeigneter Weise eine Spaltbreite zwischen 10 µm und 200 µm, beispielsweise zwischen 30 µm und 150 µm, insbesondere zwischen 40 µm und 120 µm auf.

Die Dicke bzw. die Dichte wird dabei je nach Art der Elektrode, also ob die Elektrode eine Anode oder eine Kathode ist, und/oder je nach vorgesehener Verwendung der Elektrode, insbesondere entsprechend einer Anforderung einer Leistungsdichte und/oder einer Energiedichte an eine Batteriezelle mit einer solchen Elektrode, eingestellt.

Gemäß einer bevorzugten Ausgestaltung ist und/oder wird die Umfangsgeschwindigkeit der zweiten Walze größer als die der ersten Walze eingestellt. Zusätzlich oder alternativ hierzu ist und/oder wird die Umfangsgeschwindigkeit der dritten Walze größer als die Umfangsgeschwindigkeit der zweiten Walze eingestellt. Zweckmäßig ist der Betrag der Umfangsgeschwindigkeiten der dritten und der vierten Walze gleich.

Bevorzugt ist analog hierzu bei der ersten Variante und bei der zweiten Variante die Umfangsgeschwindigkeit der sechsten Walze größer als die der fünften Walze eingestellt. Bei der ersten Variante ist und/oder wird zusätzlich oder alternativ hierzu die Umfangsgeschwindigkeit der siebten Walze größer als die Umfangsgeschwindigkeit der sechsten Walze eingestellt. Bei der zweiten Variante ist und/oder wird zusätzlich oder alternativ hierzu die Umfangsgeschwindigkeit der vierten Walze größer als die Umfangsgeschwindigkeit der sechsten Walze eingestellt.

Beispielsweise wird hierzu bei gleichem Durchmesser der beiden Walzen des jeweiligen Walzenpaares (also der ersten und der zweiten Walze, der zweiten und der dritten Walze, der sechsten und der siebten Walze, bzw. der siebten und der achten Walze die Winkelgeschwindigkeit, somit die Umdrehungszahl, der zweiten Walze größer als diejenige der ersten Walze. Weiter beispielsweise ist bei gleicher Winkelgeschwindigkeit der ersten und der zweiten Walze der Durchmesser der zweiten Walze größer als der Durchmesser der ersten Walze.

Die größere Umfangsgeschwindigkeit einer der Walzen des jeweiligen Walzenpaares resultiert darin, dass der erste bzw. zweite Trockenfilm vergleichsweise zuverlässig auf der Walze mit der größeren Umfangsgeschwindigkeit getragen wird, und/oder dass die Längung des Trockenfilms bei der Verdichtung abgefangen, also kompensiert, werden kann.

Beispielsweise beträgt das Verhältnis der Umfangsgeschwindigkeit, insbesondere der Rotationsgeschwindigkeit, der schneller rotierenden Walze zur Umfangsgeschwindigkeit, insbesondere der Rotationsgeschwindigkeit, der langsamer rotierenden Walze des den jeweiligen Walzenspalt bildenden Walzenpaares zwischen 3:1 und 20:1, insbesondere zwischen 4:1 und 10:1.

Alternativ oder zusätzlich hierzu wird und/oder ist gemäß einer geeigneten Ausgestaltung die Temperatur der zweiten Walze größer als die Temperatur der ersten Walze eingestellt. Zusätzlich oder alternativ hierzu ist und/oder wird die Temperatur der dritten Walze größer als die Temperatur der zweiten Walze eingestellt. Zweckmäßig ist die Temperatur der dritten und der vierten Walze gleich.

Beispielsweise wird für das Verdichten eine höhere Temperatur gewählt als für das Laminieren. Dies ist zwar nachteilig für die Zuverlässigkeit des Walzentragens, allerdings vorteilhaft für das Verdichten und/oder für das Laminieren.

Bevorzugt ist analog hierzu bei der ersten Variante und bei der zweiten Variante die Temperatur der sechsten Walze größer als die der fünften Walze eingestellt. Bei der ersten Variante ist und/oder wird zusätzlich oder alternativ hierzu die Temperatur der siebten Walze größer als die Temperatur der sechsten Walze eingestellt. Bei der zweiten Variante ist und/oder wird zusätzlich oder alternativ hierzu die Temperatur der vierten Walze größer als die Temperatur der sechsten Walze eingestellt.

Beispielsweise beträgt die Differenz der Temperatur der wärmeren Walze zur Temperatur der kühleren Walze des den jeweiligen Walzenspalt bildenden Walzenpaares zwischen 1°C und 50 °C, insbesondere zwischen 1 und 20°C, vorzugsweise zwischen 5°C und 20°C.

Die größere Temperatur einer der Walzen des jeweiligen Walzenpaares resultiert darin, dass der erste bzw. zweite Trockenfilm vergleichsweise zuverlässig auf der Walze mit der größeren Temperatur getragen wird.

Alternativ oder zusätzlich hierzu weist gemäß einer geeigneten Ausgestaltung die Oberfläche der zweiten Walze eine größere Rauheit als die Oberfläche der ersten Walze auf. Zusätzlich oder alternativ weist die Oberfläche der dritten Walze eine größere Rauheit als die Oberfläche der zweiten Walze auf.

Bevorzugt ist analog hierzu bei der ersten Variante und bei der zweiten Variante die Rauheit der der Oberfläche sechsten Walze größer als die der fünften Walze. Bei der ersten Variante ist zusätzlich oder alternativ hierzu die Rauheit der der Oberfläche siebten Walze größer als die Rauheit der Oberfläche der sechsten Walze. Bei der zweiten Variante ist zusätzlich oder alternativ hierzu die Rauheit der Oberfläche der vierten Walze größer als die Rauheit der der Oberfläche der sechsten Walze.

Die größere Rauheit der Oberfläche einer der Walzen des jeweiligen Walzenpaares resultiert darin, dass der erste bzw. zweite Trockenfilm vergleichsweise zuverlässig auf der Walze mit der größeren Oberflächenrauheit getragen wird.

Ein weiterer Aspekt der Erfindung betrifft eine Vorrichtung zur Herstellung einer Elektrode, die Substrat und einen ersten Trockenfilm aufweist, gemäß dem Verfahren in einer der oben dargestellten Ausgestaltungen. Die Vorrichtung umfasst also zumindest die erste, die zweite, die dritte und die vierte Walze.

Dabei ist zwischen der ersten und der zweiten Walze ein erster Walzenspalt gebildet. Weiterhin umfasst die Vorrichtung eine Fördereinrichtung, beispielswiese einen sogenannten Hopper, zum Fördern von lösungsmittelfreiem Trockenfilmmaterial in den ersten Walzenspalt.

Weiterhin ist zwischen der zweiten und der dritten Walze der zweite Walzenspalt zur Verdichtung des im ersten Walzenspalt gebildeten ersten Trockenfilms gebildet.

Weiterhin umfasst die Vorrichtung eine Zufuhreinrichtung zum Zuführen des Substrats in den zwischen der dritten und der vierten Walze gebildeten dritten Walzenspalt.

Zweckmäßig sind die erste, die zweite, die dritte und die vierte Walze dazu eingerichtet, dass der erste Trockenfilm vom ersten Walzenspalt zum zweiten Walzenspalt an der zweiten Walze walzengetragen ist bzw. wird, und dass der erste Trockenfilm vom zweiten Walzenspalt zum dritten Walzenspalt an der dritten Walze walzengetragen ist bzw. wird. Hierzu ist die Winkelgeschwindigkeit (Rotationsgeschwindigkeit) oder die Temperatur jeder der Walzen einzeln einstellbar. Wie im Zusammenhang mit dem Verfahren dargestellt, ist dabei zweckmäßig die Umfangsgeschwindigkeit und/oder die Temperatur der zweiten Walze größer als die der ersten Walze und/oder die Umfangsgeschwindigkeit und/oder die Temperatur der dritten Walze größer als die der zweiten Walze. Zusätzlich oder alternativ hierzu weisen die Oberflächen der Walzen wie im Zusammenhang mit dem Verfahren beschreiben unterschiedliche Rauheiten auf, wobei insbesondere die Rauheit der Oberfläche der zweiten Walze größer als die der ersten Walze und/oder die Rauheit der Oberfläche der dritten Walze größer als die der zweiten Walze ist.

Bevorzugt sind die erste, die zweite die dritte und die vierte Walze derart angeordnet, dass deren (Dreh-)Achsen parallel zueinander orientiert und in einer gemeinsamen Ebene angeordnet sind. Vorteilhaft ist auf diese Weise eine Durchbiegung der Walzen (Roll-Bending) vermieden oder zumindest reduziert.

In Zweckmäßiger Ausgestaltung ist die Linienlast und/oder die Spaltbreite des ersten Walzenspaltes, des zweiten Walzenspaltes, und/oder des dritten Walzenspaltes einzeln, also separat und/oder unabhängig zueinander, einstellbar. Zusätzlich oder alternativ hierzu ist bzw. wird im ersten Walzenspalt und/oder im zweiten Walzenspalt die Spaltbreite geregelt. Zusätzlich oder alternativ ist bzw. wird im dritten Walzenspalt die Linienlast, also die Spaltkraft, geregelt ist.

Auf diese Weise ist bei all diesen Varianten ein vergleichsweise genaues Einstellen des Spalts bzw. der Linienlast für die unterschiedlichen Aufgaben des jeweiligen Spaltes (Filmbildung, Verdichten bzw. Laminieren) ermöglicht.

Nachfolgend werden Ausführungsbeispiele der Erfindung anhand einer Zeichnung näher erläutert. Darin zeigen:
- Fig. 1: eine Vorrichtung zur Herstellung einer Elektrode in einer ersten Ausführungsform,
- Fig. 2: die Vorrichtung in einer zweiten Ausführungsform,
- Fig. 3: die Vorrichtung in einer dritten Ausführungsform,
- Fig. 4: in einem Flussdiagramm einen Verfahrensablauf zur Herstellung der Elektrode gemäß einer ersten Variante, und
- Fig 5: in einem Flussdiagramm einen Verfahrensablauf zur Herstellung der Elektrode gemäß einer zweiten Variante.

Einander entsprechende Teile und Größen sind in allen Figuren stets mit gleichen Bezugszeichen versehen.

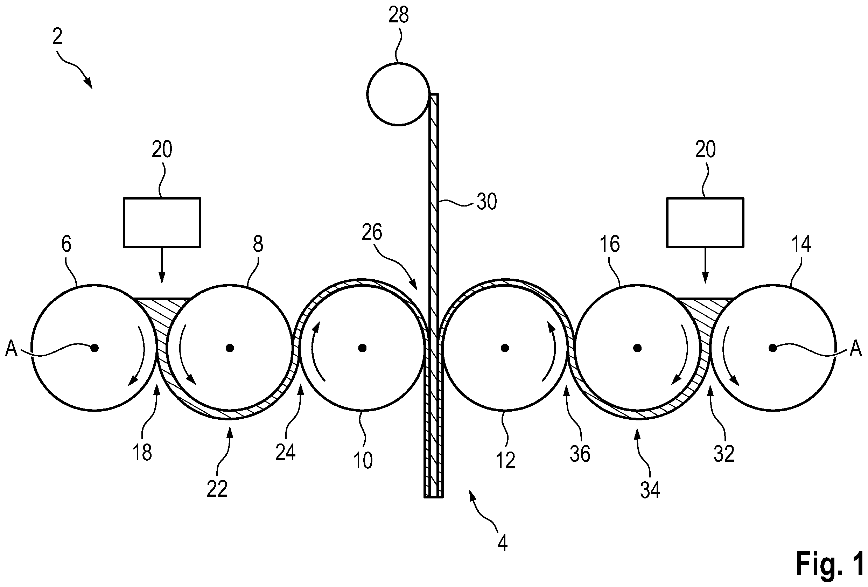

In der Fig. 1 ist eine erste Ausführungsform einer Vorrichtung 2 dargestellt, welche zur Herstellung einer Elektrode 4 vorgesehen und eingerichtet ist. Die Vorrichtung umfasst hierbei sechs Walzen, nämlich eine erste Walze 6, eine zweite Walze 8, eine dritte Walze 10, eine vierte Walze 12, eine fünfte Walze 14 und eine sechste Walze 16. Diese sind ein einer Reihe angeordnet, mit anderen Worten sind deren (Dreh-) Achsen A parallel zueinander und ein einer gemeinsamen Ebene angeordnet. Die Drehrichtungen aller Walzen ist jeweils anhand eines Pfeils dargestellt. Die Walzen 6 bis 16 weisen gemäß dem hier dargestellten Ausführungsbeispiel den gleichen Durchmesser auf.

Zwischen der ersten Walze 6 und der zweiten Walze 8 ist ein erster Walzenspalt 18 gebildet. Mit anderen Worten ist die erste und die zweite Walze 6, 8 unter Bildung des ersten Walzenspaltes 18 beabstandet zueinander angeordnet. Eine beispielsweise als Hopper ausgebildete Fördereinrichtung 20 der Vorrichtung 2 ist dazu eingerichtet, lösungsmittelfreies und somit trockenes Trockenfilmmaterial zwischen die erste Walze 6 und die zweite Walze 8, somit in den ersten Walzenspalt 18 zu fördern. Die erste Walze 6 ist in der Walzenreihe außen angeordnet, mit anderen Worten bildet die erste Walze 6 ein erstes Reihenende. Die erste und die zweite Walze 6, 8 dienen dazu, das in den ersten Walzenspalt 18 geförderte Trockenfilmmaterial zu einem ersten Trockenfilm 22 zu verarbeiten.

Zwischen der zweiten Walze 8 und der dritten Walze 10 ist ein zweiter Walzenspalt 24 gebildet. Dieser weist eine Spaltbreite auf, welcher einer vorgegebenen Zieldicke des ersten Trockenfilms 22 entspricht. Die zweite und der dritte Walze 8, 10 sind somit zur Verdichtung des ersten Trockenfilms 22 vorgesehen und eingerichtet. Also ist die Spaltbreite des zweiten Walzenspaltes 24 kleiner als diejenige des ersten Walzenspaltes 18.

Zwischen der dritten Walze 10 und der vierten Walze 12 ist ein dritter Walzenspalt 26 gebildet. Eine hier beispielhaft als Leitwalze dargestellte Zufuhreinrichtung 28 der Vorrichtung 2 ist dazu eingerichtet ein, insbesondere folienartiges, Substrat 30 in den dritten Walzenspalt 26 zuzuführen.

Die fünfte Walze 14 ist in der Walzenreihe außen angeordnet, mit anderen Worten bildet die fünfte Walze 14 ein zweites Reihenende der Walzenreihe. Zwischen der fünften und der sechsten Walze 16 ist ein vierter Walzenspalt 32 gebildet. Eine beispielsweise als Hopper ausgebildete weitere Fördereinrichtung 20 der Vorrichtung 2 ist dazu eingerichtet, lösungsmittelfreies und somit trockenes Trockenfilmmaterial zwischen die fünfte Walze 14 und die sechste Walze 8, somit in den vierten Walzenspalt 32 zu fördern. Die fünfte und die sechste Walze 14, 16 dienen dazu, das in den vierten Walzenspalt 32 geförderte Trockenfilmmaterial zu einem zweite Trockenfilm 34 zu verarbeiten.

Zwischen der sechsten Walze 16 und der vierten Walze 12 ist ein fünfter Walzenspalt 36 gebildet. Dieser weist eine Spaltbreite auf, welcher einer vorgegebenen Zieldicke des zweiten Trockenfilms 34 entspricht. Die vierte und der sechste Walze 12, 16 sind somit zur Verdichtung des ersten zweiten Trockenfilms 34 vorgesehen und eingerichtet. Also ist die Spaltbreite des fünften Walzenspaltes 36 kleiner als diejenige des vierten Walzenspaltes 32.

Die Vorrichtung 2 ist derart eingerichtet, dass der im ersten Walzenspalt 18 gebildet erste Trockenfilm 22 an der zweiten Walze 8 vom ersten Walzenspalt 18 walzengetragen in den zweiten Walzenspalt 24 gefördert wird. Zudem ist die Vorrichtung 2 derart eingerichtet, dass der im zweiten Walzenspalt 24 verdichtete erste Trockenfilm 22 an der dritten Walze 10 walzengetragen vom zweiten Walzenspalt 24 in den dritten Walzenspalt 26 gefördert wird.

Hierzu ist eine Umfangsgeschwindigkeit der zweiten Walze 8 größer als die der ersten Walze 6 eingestellt, insbesondere ist eine Umdrehungsgeschwindigkeit (Winkelgeschwindigkeit) der zweiten Walze 8 größer als die Umdrehungsgeschwindigkeit der ersten Walze 6. Eine Umfangsgeschwindigkeit der dritten Walze 10 ist größer als die der zweiten Walze 8 eingestellt, insbesondere ist eine Umdrehungsgeschwindigkeit (Winkelgeschwindigkeit) der dritten Walze 10 größer als die Umdrehungsgeschwindigkeit der zweiten Walze 8. Alternativ oder zusätzlich hierzu ist die Rauheit der Oberfläche der zweiten Walze 8 größer als die der ersten Walze 6, und die Rauheit der Oberfläche der dritten Walze 10 größer als die der zweiten Walze 8. Zusätzlich oder alternativ hierzu ist die Temperatur der zweiten Walze 8 größer als diejenige der ersten Walze 6 und die Temperatur der dritten Walze 10 größer als die der zweiten Walze 8.

Analog hierzu ist die Vorrichtung 2 ist derart eingerichtet, dass der im vierten Walzenspalt 32 gebildet zweite Trockenfilm 34 an der sechsten Walze 16 vom vierten Walzenspalt 32 walzengetragen in den fünften Walzenspalt 36 gefördert wird. Zudem ist die Vorrichtung 2 derart eingerichtet, dass der im fünften Walzenspalt 36 verdichtete zweite Trockenfilm 34 an der vierten Walze 12 walzengetragen vom fünften Walzenspalt 24 in den dritten Walzenspalt 26 gefördert wird.

Hierzu ist eine Umfangsgeschwindigkeit der sechsten Walze 16 größer als die der fünften Walze 14 eingestellt, insbesondere ist eine Umdrehungsgeschwindigkeit (Winkelgeschwindigkeit) der sechsten Walze 16 größer als die Umdrehungsgeschwindigkeit der fünften Walze 14. Eine Umfangsgeschwindigkeit der vierten Walze 12 ist größer als die der sechsten Walze 16 eingestellt, insbesondere ist eine Umdrehungsgeschwindigkeit (Winkelgeschwindigkeit) der vierten Walze 12 größer als die Umdrehungsgeschwindigkeit der sechsten Walze 16. Alternativ oder zusätzlich hierzu ist die Rauheit der Oberfläche der sechsten Walze 16 größer als die der fünften Walze 14, und die Rauheit der Oberfläche der vierten Walze 12 ist größer als die der sechsten Walze 16. Zusätzlich oder alternativ hierzu ist die Temperatur der sechsten Walze 16 größer als diejenige der fünften Walze 14 und die Temperatur der vierten Walze 12 größer als die der sechsten Walze 16.

Zweckmäßigerweise entspricht die Bahngeschwindigkeit des ersten Trockenfilms 22 bzw. des zweiten Trockenfilms 34 der Umfangsgeschwindigkeit der dritten Walze 10 bzw. der vierten Walze 12.

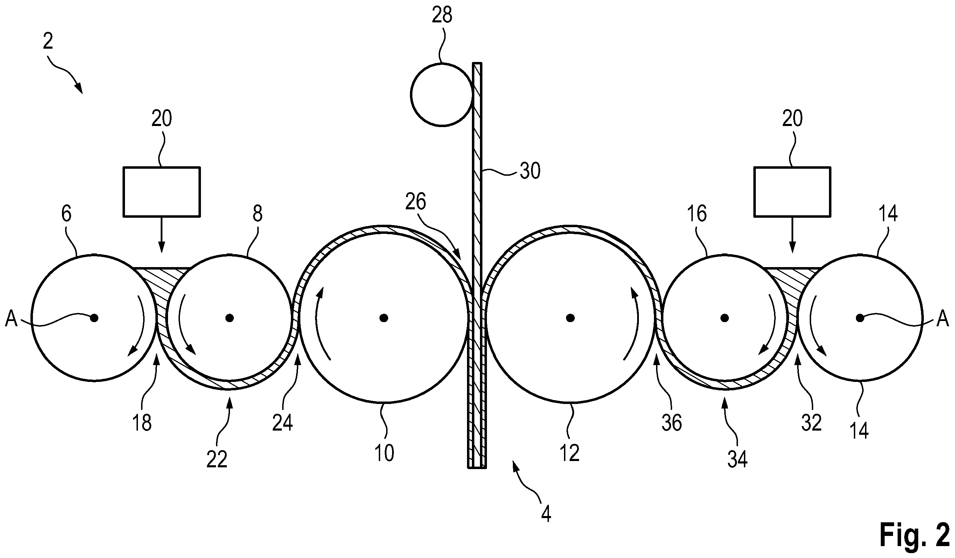

In der Fig. 2 ist eine zweite Ausführungsform der Vorrichtung 2 dargestellt. Die Ausführungen zur Vorrichtung 2 der Fig. 1 gelten in analoger Weise. Im Unterschied zur Ausführungsform der Fig. 1 sind die Durchmesser der Walzen 6 bis 16 nicht gleich. So sind die Durchmesser der dritten und der vierten Walze 10, 12 gleich groß, aber größer als der Durchmesser der ersten, zweiten, fünften und sechsten Walze 6, 8, 14, 16. Aufgrund des vergleichsweise großen Durchmessers der dritten und der vierten Walze ist ein Roll-Bending dieser Walzen 10, 12 beim laminieren des erste und des zweiten Trockenfilms 22, 34 auf das Substrat 30 vorteilhaft vermieden oder eine Gefahr dessen zumindest reduziert.

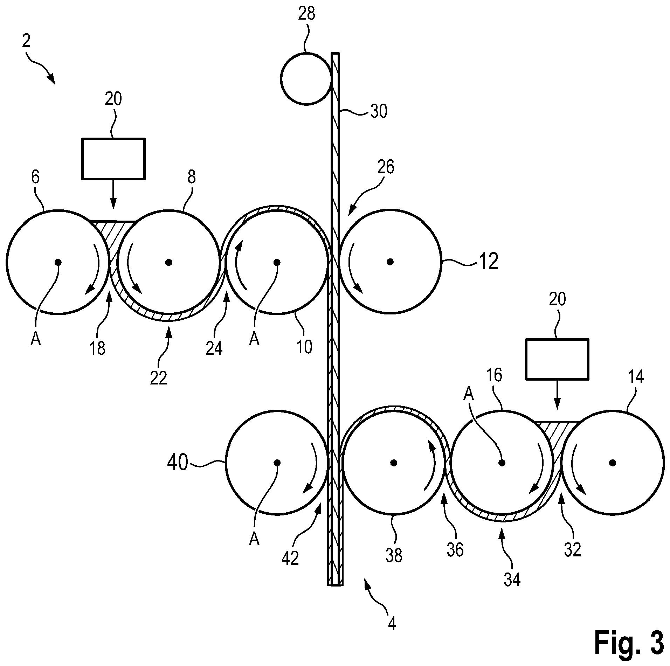

In der Fig. 3 ist eine dritte Ausführungsform der Vorrichtung 2 dargestellt. Diese umfasst die erste, die zweite, die dritte und die vierte Walze 6, 8, 10, 12, welcher in einer ersten Reihe angeordnet sind. Die Ausführungen zu den Walzen 6 bis 10 der Vorrichtung der ersten Ausführungsform gelten hier in analoger Weise, jedoch ist der dritte Walzenspalt 26 dazu vorgesehen und eingerichtet, lediglich den ersten Trockenfilm 22 auf das Substrat aufzulaminieren.

Zusammenfassend ist die Vorrichtung dazu vorgesehen und eingerichtet, dass der erste Trockenfilm 22 anhand der ersten und der zweiten Walze 6, 8 im ersten Walzenspalt 18 gebildet wird, dass der im ersten Walzenspalt 18 gebildete erste Trockenfilm 22 an der zweiten Walze 8 walzengetragen in den zweiten Walzenspalt 24 gefördert und dort anhand der zweiten und der dritten Walze 8, 10 verdichtet wird. Weiterhin ist die Vorrichtung 2 gemäß der dritten Ausführungsform dazu vorgesehen und eingerichtet, dass der verdichtete erste Trockenfilm 22 vom zweiten Walzenspalt 24 an der dritten Walze 10 walzengetragen in den dritten Walzenspalt 26 gefördert wird, wo der verdichtete erste Trockenfilm 22 auf das Substrat 30 auflaminiert wird.

Die Vorrichtung 2 gemäß der dritten Ausführungsform umfasst weiterhin eine zweite Reihe an Walzen. Diese zweite Reihe umfasst die fünfte Walze 14, die sechste Walze 16, eine siebte Walze 38 und eine achte Walze 40. Dabei ist die Vorrichtung 2 dazu vorgesehen und eingerichtet, dass der zweite Trockenfilm 34 anhand der fünften und der sechsten Walze 14, 16 im vierten Walzenspalt 32 gebildet wird, und dass der im vierten Walzenspalt 32 gebildete zweite Trockenfilm 34 an der sechsten Walze 16 walzengetragen in den zwischen der sechsten und der siebten Walze 16, 38 gebildeten fünften Walzenspalt 36 gefördert und dort anhand der sechsten und der siebten Walze 16, 38 verdichtet wird. Weiterhin ist die Vorrichtung 2 gemäß der dritten Ausführungsform dazu vorgesehen und eingerichtet, dass der verdichtete zweite Trockenfilm 34 vom fünften Walzenspalt 36 an der siebten Walze 38 walzengetragen in einen zwischen der siebten und der achten Walze 38, 40 gebildeten sechsten Walzenspalt 42 gefördert wird, wo der verdichtete zweite Trockenfilm 34 auf das mit dem ersten Trockenfilm 22 versehene Substrat 30 auflaminiert wird.

Hierzu ist bei den Walzen 14 bis 40 der zweiten Walzenreihe eine Umfangsgeschwindigkeit der sechsten Walze 16 größer als die der fünften Walze 14 eingestellt, insbesondere ist eine Umdrehungsgeschwindigkeit (Winkelgeschwindigkeit) der sechsten Walze 16 größer als die Umdrehungsgeschwindigkeit der fünften Walze 14. Eine Umfangsgeschwindigkeit der siebten Walze 38 ist größer als die der sechsten Walze 16 eingestellt, insbesondere ist eine Umdrehungsgeschwindigkeit (Winkelgeschwindigkeit) der siebten Walze 38 größer als die Umdrehungsgeschwindigkeit der sechsten Walze 16. Alternativ oder zusätzlich hierzu ist die Rauheit der Oberfläche der sechsten Walze 16 größer als die der fünften Walze 14, und die Rauheit der Oberfläche der siebten Walze 38 größer als die der sechsten Walze 16. Zusätzlich oder alternativ hierzu ist die Temperatur der sechsten Walze 16 größer als diejenige der fünften Walze 14 und die Temperatur der siebten Walze 38 größer als die der sechsten Walze 16.

Zweckmäßigerweise entspricht die Bahngeschwindigkeit des ersten Trockenfilms 22 der Umfangsgeschwindigkeit der dritten Walze 10, und/oder die Bahngeschwindigkeit des zweiten Trockenfilms 34 der Umfangsgeschwindigkeit der siebten Walze 38.

Vorzugsweise ist bei allen Varianten der Figuren 1 bis 3 in nicht näher dargestellter Weise die Linienlast und/oder die Spaltbreite des ersten Walzenspaltes 18, des zweiten Walzenspaltes 24, des dritten Walzenspaltes 26, ggf. des vierten Walzenspaltes 32, des fünften Walzenspaltes 36, und/oder des sechsten Walzenspaltes 42 einzeln, also separat zueinander, einstellbar. Zusätzlich oder alternativ hierzu ist bzw. wird im ersten Walzenspalt 18, im zweiten Walzenspalt 24, im vierten Walzenspalt 32, und/oder im fünften Walzenspalt 36 die Spaltbreite geregelt. Zusätzlich oder alternativ ist bzw. wird im dritten Walzenspalt 26 und/oder im sechsten Walzenspalt 42 die Linienlast, also die Spaltkraft, geregelt.

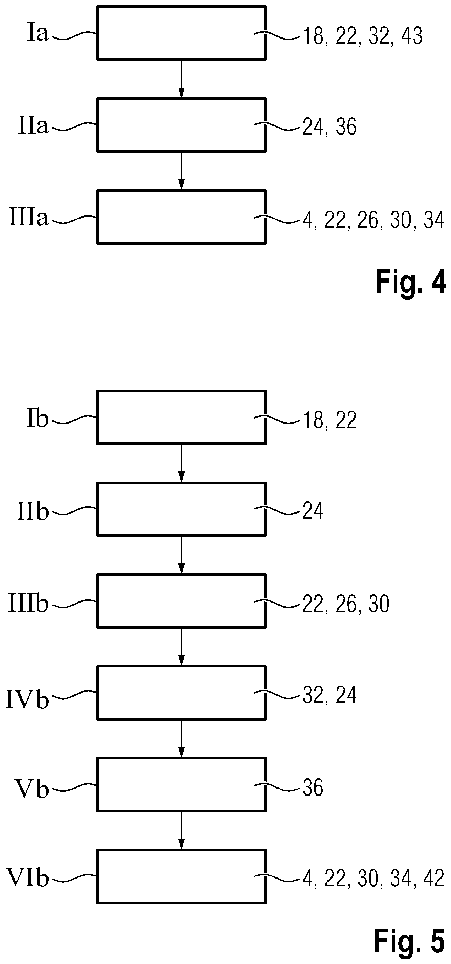

In der Fig. 4 ist ein Flussdiagramm dargestellt, welches ein Verfahren zur Herstellung der Elektrode gemäß einer ersten Variante repräsentiert. Für dieses Verfahren werden insbesondere die Vorrichtungen 2 gemäß der Fig. 1 und/oder der Fig. 2 herangezogen.

In einem ersten Schritt la wird das lösungsmittelfreie Trockenfilmmaterial in den ersten Walzenspalt 18 gefördert und dort zum ersten Trockenfilm 22 verarbeitet. Zudem wird das lösungsmittelfreie Trockenfilmmaterial in den vierten Walzenspalt 32 gefördert und dort zum zweiten Trockenfilm 34 verarbeitet.

In einem zweiten Schritt Ila werden der ersten Trockenfilm 22 an der zweiten Walze 8 walzengetragen in den zweiten Walzenspalt 24 gefördert und dort verdichtet, sowie der zweite Trockenfilm an der sechsten Walze 16 walzengetragen in den fünften Walzenspalt 36 gefördert und dort verdichtet.

In einem dritten Schritt Illa wird der verdichtete erste Trockenfilm 22 an der dritten Walze 10 walzengetragen in den dritten Walzenspalt 26 gefördert. Zudem wird der verdichtete zweite Trockenfilm 34 an der vierten Walze 12 walzengetragen in den dritten Walzenspalt 26 gefördert. Das Substrat 30 wird derart in den dritten Walzenspalt 26 gefördert, dass dieses zwischen dem ersten und dem zweiten Trockenfilm 22, 34 angeordnet ist. Im dritten Walzenspalt wird unter Bildung der Elektrode 4 der erste Trockenfilm 22 und der zweiten Trockenfilm 34 auf das Substrat 30 auflaminiert.

In der Fig. 5 ist ein Flussdiagramm dargestellt, welches ein Verfahren zur Herstellung der Elektrode gemäß einer zweiten Variante repräsentiert. Für dieses Verfahren wird insbesondere die Vorrichtungen 2 gemäß der Fig. 3 herangezogen.

In einem ersten Schritt Ib wird das lösungsmittelfreie Trockenfilmmaterial in den ersten Walzenspalt 18 gefördert und dort zum ersten Trockenfilm 22 verarbeitet.

In einem zweiten Schritt Ilb wird der erste Trockenfilm 22 an der zweiten Walze 8 walzengetragen in den zweiten Walzenspalt 24 gefördert und dort verdichtet.

In einem dritten Schritt IIIb wird der verdichtete erste Trockenfilm 22 an der dritten Walze 10 walzengetragen in den dritten Walzenspalt 26 gefördert. Zudem wird das Substrat 30 in den dritten Walzenspalt 26 gefördert, wo der erste Trockenfilm 22 auf das Substrat 30 auflaminiert wird. Auf diese Weise ist bereits eine Elektrode 4 gebildet, deren Substrat 30 lediglich auf einer Seite mit einem Trockenfilm, hier dem ersten Trockenfilm 22, versehen ist. Die folgenden Schritte werden durchgeführt, sofern eine Elektrode 4 mit einem beidseitig mit einem Trockenfilm versehenen Substrat 30 hergestellt werden soll.

In einem vierten Schritt IVb wird das lösungsmittelfreie Trockenfilmmaterial in den vierten Walzenspalt 32 gefördert und dort zum zweiten Trockenfilm 34 verarbeitet.

In einem fünften Schritt Vb wird der zweite Trockenfilm 34 an der sechsten Walze 16 walzengetragen in den fünften Walzenspalt 36 gefördert und dort verdichtet.

In einem sechsten Schritt Vlb wird der verdichtete zweite Trockenfilm 34 an der vierten Walze 12 walzengetragen in den sechsten Walzenspalt 42 gefördert. Zudem wird das mit dem ersten Trockenfilm 22 laminierte Substrat 30 derart in den sechsten Walzenspalt 42 gefördert, dass das Substrat 30 zwischen dem ersten Trockenfilm 22 und dem zweiten Trockenfilm 34 angeordnet ist. Im sechsten Walzenspalt 42 wird unter Bildung der Elektrode 4 der zweite Trockenfilm 34 auf das mit dem ersten Trockenfilm 22 versehene Substrat 30 auflaminiert.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: Vorrichtung
- 4: Elektrode
- 6: erste Walze
- 8: zweite Walze
- 10: dritte Walze
- 12: vierte Walze
- 14: fünfte Walze
- 16: sechste Walze
- 18: erster Walzenspalt
- 20: Fördereinrichtung
- 22: erster Trockenfilm
- 24: zweiter Walzenspalt
- 26: dritter Walzenspalt
- 28: Zufuhreinrichtung
- 30: Substrat
- 32: vierter Walzenspalt
- 34: zweier Trockenfilm
- 36: fünfter Walzenspalt
- 38: siebte Walze
- 40: achte Walze
- 42: sechster Walzenspalt

- A: (Dreh-)Achse der Walze
- Ia: Herstellung des ersten Trockenfilms und des zweiten Trockenfilms
- Ila: Verdichtung des ersten Trockenfilms und des zweiten Trockenfilms
- Illa: Laminieren des ersten und des zweiten Trockenfilms auf das Substrat
- Ib: Herstellung des ersten Trockenfilms
- Ilb: Verdichtung des ersten Trockenfilms
- IIb: Laminieren des ersten Trockenfilms auf das Substrat
- IVb: Herstellung des zweiten Trockenfilms
- Vb: Verdichtung des zweiten Trockenfilms
- Vlb: Laminieren des zweiten Trockenfilms auf das mit den ersten Trockenfilm versehene Substrat

## Patentansprüche

1. Verfahren zur Herstellung einer Elektrode (4) mit einem, insbesondere folienartigen, Substrat (30) und mit einem ersten Trockenfilm (22),
- wobei zur Bildung eines ersten Trockenfilms (22) lösungsmittelfreies Trockenfilmmaterial in einen zwischen einer ersten Walze (6) und einer zweiten Walze (8) gebildeten ersten Walzenspalt (18) gebracht, insbesondere gefördert, wird,
- wobei der im ersten Walzenspalt (18) gebildete erste Trockenfilm (22) walzengetragen in einen zwischen der zweiten Walze (8) und einer dritten Walze (10) gebildeten zweiten Walzenspalt (24) gefördert und dort verdichtet wird, und
- wobei zum Laminieren der verdichtete erste Trockenfilm (22) sowie das Substrat (30) in einen zwischen der dritten Walze (10) und einer vierten Walze (12) gebildeten dritten Walzenspalt (26) gefördert werden, wobei der erste Trockenfilm (22) walzengetragen in den dritten Walzenspalt (26) gefördert wird.

2. Verfahren nach Anspruch 1,
**dadurch gekennzeichnet,**
- **dass** zur Bildung eines zweiten Trockenfilms (34) lösungsmittelfreies Trockenfilmmaterial in einen zwischen einer fünften Walze (14) und einer sechsten Walze (16) gebildeten vierten Walzenspalt (32) gebracht, wird,
- wobei der im vierten Walzenspalt (32) gebildete zweite Trockenfilm (34) walzengetragen in einen zwischen der sechsten Walze (16) und einer siebten Walze (38) gebildeten fünften Walzenspalt (36) gefördert und dort verdichtet wird, und
- wobei zum miteinander Laminieren der verdichtete zweite Trockenfilm (34) sowie das mit dem ersten Trockenfilm (22) laminierte Substrat (30) in einen zwischen der siebten Walze (38) und einer achten Walze (40) gebildeten sechsten Walzenspalt (42) gefördert werden, wobei der zweite Trockenfilm (34) walzengetragen in den sechsten Walzenspalt (42) gefördert wird.

3. Verfahren nach Anspruch 1,
**dadurch gekennzeichnet,**
- **dass** zur Bildung eines zweiten Trockenfilms (34) lösungsmittelfreies Trockenfilmmaterial in einen zwischen einer fünften Walze (14) und einer sechsten Walze (16) gebildeten vierten Walzenspalt (32) gebracht, insbesondere gefördert, wird,
- wobei der im vierten Walzenspalt (32) gebildete zweite Trockenfilm (34) walzengetragen in einen zwischen der sechsten Walze (16) und der vierten Walze (12) gebildeten fünften Walzenspalt (36) gefördert und dort verdichtet wird, und
- wobei zum miteinander Laminieren der verdichtete zweite Trockenfilm (34), das Substrat (30) sowie der erste Trockenfilm (22) in den dritten Walzenspalt (26) gefördert werden, wobei der zweite Trockenfilm (34) walzengetragen in den dritten Walzenspalt (26) gefördert wird.

4. Verfahren nach einem der Ansprüche 1 bis 3,
**dadurch gekennzeichnet,**
**dass** der erste Trockenfilm (22) im zweiten Walzenspalt (24) und/oder der zweite Trockenfilm im sechsten Walzenspalt (42) jeweils auf eine Dichte zwischen 1,0 g/cm³ und 4 g/cm³, insbesondere zwischen 1,4 g/cm³ und 3,7 g/cm³ verdichtet wird.

5. Verfahren nach einem der Ansprüche 1 bis 4,
**dadurch gekennzeichnet,**
**dass** der erste Trockenfilm (22) im zweiten Walzenspalt (24) und/oder der zweite Trockenfilm im sechsten Walzenspalt (42) jeweils auf eine Dicke zwischen 10 µm und 200 µm, insbesondere zwischen 40 µm und 120 µm verdichtet wird.

6. Verfahren nach einem der Ansprüche 1 bis 5,
**dadurch gekennzeichnet,**
**dass** die Umfangsgeschwindigkeit der zweiten Walze (8) größer als die Umfangsgeschwindigkeit der ersten Walze (6) ist, und/oder dass die Umfangsgeschwindigkeit der dritten Walze (10) größer als die Umfangsgeschwindigkeit der zweiten Walze (8) ist.

7. Verfahren nach einem der Ansprüche 1 bis 6,
**dadurch gekennzeichnet,**
**dass** die Temperatur der zweiten Walze (8) größer als die Temperatur der ersten Walze (6) eingestellt ist, und/oder dass die Temperatur der dritten Walze (10) größer als die Temperatur der zweiten Walze (8) ist.

8. Verfahren nach einem der Ansprüche 1 bis 7,
**dadurch gekennzeichnet,**
**dass** die Oberfläche der zweiten Walze (8) eine größere Rauheit als die Oberfläche der ersten Walze (6) aufweist, und/oder dass die Oberfläche der dritten Walze (10) eine größere Rauheit als die Oberfläche der zweiten Walze (8) aufweist.

9. Vorrichtung (2) zur Herstellung einer Elektrode (4) mit einem Substrat (30) und mit einem ersten Trockenfilm (22) gemäß dem Verfahren nach einem der Ansprüche 1 bis 8, aufweisend,
- eine erste Walze (6) und eine zweite Walze (8), wobei zwischen der ersten Walze (6) und der zweiten Walze (8) ein erster Walzenspalt (18) gebildet ist,
- eine Fördereinrichtung (20) zum Fördern von lösungsmittelfreiem Trockenfilmmaterial in den ersten Walzenspalt (18),
- eine dritte Walze (10), wobei zwischen der zweiten Walze (8) und der dritten Walze (10) ein zweiter Walzenspalt (24) zum Verdichten eines im ersten Walzenspalts (18) gebildeten ersten Trockenfilms (22) gebildet ist,
- eine vierte Walze (12), wobei zwischen der dritten Walze (10) und der vierten Walze (12) ein dritter Walzenspalt (10) gebildet ist, und
- eine Zufuhreinrichtung zum Zuführen des Substrats (30) in den dritten Walzenspalt (26).

10. Vorrichtung (2) nach Anspruch 9,
**dadurch gekennzeichnet,**
- **dass** die Linienlast und/oder die Spaltbreite des ersten Walzenspaltes (18), des zweiten Walzenspaltes (24), und/oder des dritten Walzenspaltes (26) einzeln einstellbar ist, und/oder
- **dass** im ersten Walzenspalt (18) und/oder im zweiten Walzenspalt (26) die Spaltbreite geregelt ist, und/oder dass im dritten Walzenspalt (26) die Linienlast geregelt ist.
